# EUROPEAN PATENT APPLICATION

(11) **EP 2 857 540 A1**
(43) Date of publication of application: **08.04.2015**
(21) Application number: 13797230.3
(22) Date of filing: 20.05.2013
(51) Int. Cl.: C22C 38/00, C21D 9/52, C22C 38/06, C22C 38/16

(54) **STEEL WIRE FOR HIGH-STRENGTH SPRING HAVING EXCEPTIONAL COILING PERFORMANCE AND HYDROGEN EMBRITTLEMENT RESISTANCE, AND METHOD FOR MANUFACTURING SAME**

(30) Priority: 31.05.2012 JP 2012124581; 06.03.2013 JP 2013044766
(71) Applicant: Kabushiki Kaisha Kobe Seiko Sho (Kobe Steel, Ltd.), Kobe-shi, Hyogo 651-8585 (JP)
(72) Inventor: TAKEDA, Atsuhiko, Hyogo 657-0863 (JP); YOSHIHARA, Nao, Hyogo 657-0863 (JP)
(74) Representative: Müller-Boré & Partner Patentanwälte PartG mbB
(86) International application number: PCT/JP2013/063934
(87) International publication number: WO 2013/179934

(57) **Abstract**

A steel wire for spring is provided which exhibits high strength even without adding a large amount of alloy elements, and is for obtaining a cold winding spring having excellent coiling performance and improved hydrogen embrittlement resistance. The steel wire for spring is characterized in that C: 0.40-0.65% (mass%), Si: 1.0-3.0%, Mn: 0.6-2.0%, P: 0.015% or less (exclusive of 0%), S: 0.015% or less (exclusive of 0%), and Al: 0.015 percent by mass or less (excluding 0%) of S, and Al: 0.001-0.10% are satisfied, with the remainder consisting of iron and inevitable impurities, tempered martensite: 70 area% or more and retained austenite: 6-15 area% with respect to the total microstructure, the prior austenite grain size number obtained by a method stipulated in JIS G 0551 is No. 10.0 or more, and the tensile strength is 1,900 MPa or more.

## Description

### [Technical Field]

The present invention relates to a high strength steel wire for spring excellent in coiling performance and hydrogen embrittlement resistance (hydrogen embrittlement resistant performance) and a method for manufacturing the same. More specifically, the present invention relates to a steel wire for spring (coil spring for example) used in a heat treated (quenched and tempered) state, having high strength of 1,900 MPa tensile strength or more, and excellent in coiling performance and hydrogen embrittlement resistance, and a method for manufacturing the same.

### [Background Art]

With respect to a coil spring (for example a valve spring, suspension spring and the like used for an engine, suspension and the like) used for an automobile and the like, in order to reduce exhaust gas and to improve fuel economy, reduction of the weight has been required and high strengthening has been demanded.

With respect to the method for manufacturing the coil spring, there are two methods of hot winding and cold winding. The cold winding is a method for manufacturing a coil spring by execution of drawing a steel wire rod for spring, quenching and tempering, thereafter cold coiling, thereafter strain relieving annealing, setting, shot peening, and painting consecutively.

In the case of cold winding described above, instead of adjusting the strength by quenching and tempering after spring winding working as in the case of the hot winding, spring winding working (coiling) is executed after quenching and tempering. Therefore, a steel wire with high strength and low in workability comes to be used for the spring winding working, and breakage is liable to occur in spring winding. Such a tendency becomes extreme as high strengthening progresses. Therefore, in the case of the cold winding, for the steel wire after quenching and tempering used for spring winding working, provision of excellent ductility (coiling performance) is required. Also, because a high-strengthened spring is liable to cause hydrogen embrittlement, the steel wire for spring used for manufacturing the spring is also required to be excellent in hydrogen embrittlement resistance.

In the meantime, in recent years, it has been tried to execute quenching and tempering described above by high frequency heating that can be executed within a comparatively short time. Several technologies for obtaining a steel wire having both of excellent ductility (coiling performance) and hydrogen embrittlement resistance described above by quenching and tempering by high frequency heating have been proposed.

For example, in Patent Literature 1, it is shown that the brittle fracture resistant performance can be improved by controlling solid-solutionized C amount, Cr amount contained as Cr-contained precipitates, and the TS value expressed by a predetermined expression. Also, in Patent Literature 1, it is shown that plastic working with 0.10 or more true strain; quenching treatment of heating to T1: 850-1,100°C with the average temperature raising rate: 20 K/s or more at 200°C or above and thereafter cooling to 200°C or below with the average cooling rate: 30K/s or more; tempering treatment of heating to a temperature (T2°C) determined by a predetermined expression or above with the average temperature raising rate of 20 K/s or more at 300°C or above, holding at 300°C or above for 240 seconds or less of the residence time t1, and cooling further to 300°C or below; are executed as the manufacturing method.

In Patent Literature 2, it is shown that retained austenite amount after quenching and tempering is to be suppressed to 20 vol% or less in order to secure the corrosion resistance considering the use under a corrosive environment.

In Patent Literature 3, it is shown that the coiling performance and the fatigue performance can be improved by controlling the chemical composition and controlling the size and density of carbide and the prior austenite grain size number.

In Patent Literature 4, it is shown that the coiling performance and the hydrogen embrittlement resistant performance could be improved by controlling the average grain size of prior austenite, and the amount, average grain size and maximum grain size of retained austenite.

In the meantime, from the view point of the cost reduction, use of the alloy element such as Cr and the like has been suppressed. Also, from the view point of improving the corrosion fatigue characteristic by making the shape of the corrosion pit generated under a corrosive environment appropriate (shallow), suppression of Cr amount has been required.

However, when the alloy element amount of Cr and the like described above is suppressed, it becomes hard to secure high strength.

In Patent Literature 5, it is suggested that delayed fracture property could be improved by controlling the grain size of the prior austenite grain and the density of undissolved carbide of a constant size without making the alloy element such as Cr and the like described above indispensable.

### [Citation List]

### [Patent Literature]

Patent Literature 1: Japanese Unexamined Patent Application Publication No. 2007-191776
Patent Literature 2: Japanese Unexamined Patent Application Publication No. 2006-291291
Patent Literature 3: Japanese Unexamined Patent Application Publication No. 2002-180198
Patent Literature 4: Japanese Patent No. 4423254
Patent Literature 5: Japanese Unexamined Patent Application Publication No. 2004-143482

### [Summary of Invention]

### [Technical Problem]

However, most of the examples disclosed in the Patent Literature 5 are examples using Cr, and not to use Cr is not the premise. Also, in the examples disclosed in the Patent Literature 5, in the examples in which Cr is not contained, alloy elements such as Cu, Ti, Nb and the like are used.

In other words, in the technology of Patent Literature 5, in order to secure the strength, Cr or other alloy elements (Cu, Ti, Nb) are used. Therefore, in Patent Literature 5, the event that high strength can be achieved even without using these Cr and the like has not been shown.

The present invention has been developed in view of such circumstances as described above, and its object is to provide a steel wire for spring obtained by quenching and tempering by high frequency heating, exhibiting high strength of 1,900 MPa or more even without using Cr and without making the alloy elements such as Cr and the like indispensable, and excellent in coiling performance and hydrogen embrittlement resistance.

### [Solution to Problem]

The high strength steel wire for spring of the present invention which could solve the problems described above is characterized in that C: 0.40-0.65% (means mass%, hereinafter the same with respect to the chemical composition), Si: 1.0-3.0%, Mn: 0.6-2.0%, P: 0.015% or less (exclusive of 0%), S: 0.015% or less (exclusive of 0%), and Al: 0.001-0.10% are satisfied, and the remainder consists of iron and inevitable impurities, tempered martensite: 70 area% or more, and retained austenite: 6-15 area% with respect to all microstructures are satisfied, prior austenite grain size number obtained by a method stipulated in JIS G 0551 is No. 10.0 or more, and tensile strength is 1,900 MPa or more.

Although the high strength steel wire for spring can secure desired properties by the chemical composition described above, according to the use, in order to further secure corrosion resistance and the like, elements shown in (a) and (b) shown below may be further contained.
(a) One or more elements selected from the group consisting of Cu: 0.05-1.5%, and Ni: 0.05-1.5%.
(b) One or more elements selected from the group consisting of Ti: 0.10% or less (exclusive of 0%), B: 0.010% or less (exclusive of 0%), Nb: 0.10% or less (exclusive of 0%), Mo: 0.5% or less (exclusive of 0%), and V: 0.3% or less (exclusive of 0%).

In the present invention, a spring obtained using the high strength steel wire for spring described above is also included.

Further, in the present invention, a method for manufacturing the high strength steel wire for spring described above is also included. The method for manufacturing is characterized by using steel satisfying the chemical composition described above and executing quenching and tempering executed after drawing so as to satisfy all of the quenching conditions described below and the tempering conditions described below.

### (Quenching conditions)

- Average temperature raising rate (HR1) from 100°C to heating temperature (T1) for quenching shown below: 40°C/s or more
- Heating temperature (T1) for quenching: 850-1,000°C
- Holding time (t1) at heating temperature for quenching: 90 seconds or less
- Average cooling rate (CR1) from 300°C to 80°C after heating for quenching: 5-30°C/s

### (Tempering conditions)

- Average temperature raising rate (HR2) from 100°C to heating temperature (T2) for tempering shown below: 30°C/s or more
- Heating temperature (T2) for tempering: 350-550°C
- Holding time (t2) at heating temperature for tempering: 5-90 seconds
- Average cooling rate (CR2) from T2 described above (however, it is 400°C when T2 described above is 400°C or above) to 100°C after heating for tempering: 30°C/s or more

### [Advantageous Effects of Invention]

According to the present invention, a steel wire for spring not using Cr, not making the alloy elements such as Cr and the like indispensable, executing quenching and tempering by high frequency heating, exhibiting high strength of 1,900 MPa or more and excellent in coiling performance and hydrogen embrittlement resistance is obtained. Because the steel wire for spring of the present invention does not use Cr as described above, it can suppress the production cost and is excellent in corrosion resistance. Also, because the alloy elements such as Cr and the like is not indispensable as described above, the steel wire for spring of the present invention can further suppress the production cost of the steel wire. As a result, a high strength spring scarcely causing hydrogen embrittlement (for example a coil spring such as a suspension spring and the like which is one of the components for automobiles) can be supplied at a low cost.

### [Description of Embodiments]

In order to solve the problems described above, the present inventors made intensive studies to obtain a steel wire for spring exhibiting high strength and excellent in coiling performance and hydrogen embrittlement resistance without using alloy elements such as Cr and the like firstly. As a result, it was found out that, when the composition formed of basic components was controlled, the quenching and tempering conditions in the manufacturing step were controlled particularly and the microstructures described below were secured without deteriorating the strength, the excellent properties described above could be achieved even without using expensive alloy elements, and the present invention was completed.

First, the reasons for stipulating the microstructure in the present invention will be described.

### [Microstructure]

### [Retained austenite (retained γ) amount: 6-15 area%]

Austenite is a phase that is soft and essentially high in ductility. Therefore, by properly dispersing retained austenite in hard martensite, the reduction of area improves and excellent coiling performance can be secured. Also, because retained austenite effectively acts as a hydrogen trap site, it reduces sensitivity against hydrogen embrittlement and contributes also to improvement of hydrogen embrittlement resistance. In the present invention, in order to secure both properties of excellent coiling performance and hydrogen embrittlement resistance, the retained austenite amount was made 6 area% or more. The retained austenite amount is preferably 8 area% or more, and more preferably 10 area% or more.

On the other hand, when the retained austenite amount is excessive, a high hardness section is formed by working-induced martensitic transformation, the reduction of area deteriorates, and excellent coiling performance becomes hard to be obtained. Also, the high hardness section formed acts as a stress concentration source and is embrittled, and therefore deterioration of hydrogen embrittlement resistance is also incurred. Accordingly, the upper limit of the retained austenite amount was made 15 area%. The retained austenite amount is preferably 13 area% or less.

Also, in the technology of Patent Literature 1 described above, because the retained austenite amount is as small as 5% or less in terms of the volume ratio (the paragraph 0034 of Patent Literature 1), it is supposed to be difficult to secure both properties of coiling performance and hydrogen embrittlement resistance.

### [Prior austenite grain size number: No. 10.0 or more]

By refining the prior austenite grain, coiling performance and hydrogen embrittlement resistance improve. Therefore, in the present invention, the prior austenite (prior γ) grain size number obtained by a method stipulated in JIS G 0551 was made No. 10.0 or more. The prior γ grain size number is preferably No. 10.5 or more, and more preferably No. 11.0 or more. Also, the upper limit of the prior γ grain size number is approximately No. 14.0.

### [Tempered martensite: 70 area% or more]

With respect to the steel (steel wire) of the present invention, the microstructure is mainly of tempered martensite (70 area% or more in terms of the rate against the total microstructure). In order to secure high strength and high toughness, it is necessary to execute quenching and tempering treatment described below, and to achieve the microstructure mainly of tempered martensite described above. Tempered martensite is preferably 80 area% or more.

Although bainite, ferrite, pearlite and the like can be contained as other microstructures, these are 10 area% or less even when they are contained. These are preferably 0 area%.

Next, the reasons for stipulating the chemical composition of the present invention will be described.

### [C: 0.40-0.65%]

C is an element required for securing high strength, and is also an element effective in improving hydrogen embrittlement resistance by formation of fine carbide. Therefore, C is to be contained by 0.40% or more. C amount is preferably 0.50% or more, and more preferably 0.58% or more. However, when C amount becomes excessively high, the retained austenite amount after quenching and tempering increases more than necessity, and hydrogen embrittlement resistance may possibly deteriorate adversely. Further, because C is also an element deteriorating the corrosion resistance, in order to increase the corrosion fatigue property of a spring product (suspension spring and the like) which is a final product, C amount should be suppressed. Therefore, in the present invention, C amount was made 0.65% or less. C amount is preferably 0.62% or less.

### [Si: 1.0-3.0%]

Si is an element required for securing the strength, and has an effect of refining carbide. In order to exert such an effect effectively, Si should be contained by 1.0% or more. Si amount is preferably 1.3% or more, and more preferably 1.8% or more. On the other hand, Si is also an element promoting decarburization. When Si is contained excessively, in the manufacturing step of the steel wire, formation of the decarburized layer on the steel surface is promoted. As a result, the peeling step becomes necessary for removing the decarburized layer, and increase of the production cost is incurred. Therefore, in the present invention, the upper limit of Si amount was made 3.0%. Si amount is preferably 2.5% or less, and more preferably 2.2% or less.

### [Mn: 0.6-2.0%]

Mn is an element utilized as a deoxidizing element, and useful in forming MnS with S that is a harmful element in steel and making S harmless. Further, Mn is also an element contributing to improvement of the strength. In order to exert such an effect effectively, Mn amount is made 0.6% or more. Mn amount is preferably 0.7% or more, and more preferably 0.8% or more. However, when Mn is contained excessively, the retained γ amount becomes liable to increase more than necessity, and the hydrogen embrittlement resistance and ductility (coiling performance) deteriorate adversely. Because of these reasons, in the present invention, Mn amount is made 2.0% or less. Mn amount is preferably 1.6% or less, and more preferably 1.3% or less.

### [P: 0.015% or less (exclusive of 0%)]

P is a harmful element that deteriorates ductility (coiling performance) of steel. Therefore, P amount is preferably as little as possible, and the upper limit thereof is made 0.015%. P amount is preferably 0.010% or less, and more preferably 0.008% or less.

### [S: 0.015% or less (exclusive of 0%)]

Similar to P described above, S is also a harmful element that deteriorates ductility (coiling performance) of steel. Therefore, S amount is preferably as little as possible, and the upper limit thereof is made 0.015%. S amount is preferably 0.010% or less, and more preferably 0.008% or less.

### [Al: 0.001-0.10%]

Al is added mainly as a deoxidizing element. Also, Al makes solid-solutionized N harmless by forming AlN with N, and contributes also to refinement of the microstructure. In order to exert such an effect sufficiently, Al amount should be 0.001% or more. Al amount is preferably 0.002% or more. However, similar to Si, Al is also an element promoting decarburization. Therefore, in the steel wire for spring containing a large amount of Si, it is necessary to suppress Al amount, and Al amount was made 0.10% or less in the present invention. Al amount is preferably 0.07% or less, more preferably 0.030% or less, and further more preferably 0.020% or less.

The composition of the steel of the present invention is as described above, and the remainder consists of iron and inevitable impurities.

The steel wire for spring of the present invention does not contain Cr as described above. Also, even without using the alloy element such as Cu and the like, high strength and excellent coiling performance and hydrogen embrittlement resistance can be achieved by the chemical composition described above. Aiming at further provision of corrosion resistance and the like according to the use, elements described below may be contained further.

### [One or more elements selected from the group consisting of Cu: 0.05-1.5% and Ni: 0.05-1.5%]

Cu is an element effective in suppressing surface layer decarburization and improving corrosion resistance. In order to exert such an effect, Cu amount is preferably 0.05% or more, and more preferably 0.2% or more. However, when Cu is contained excessively, there are cases that a crack occurs in hot working, and retained austenite amount after quenching extremely increases and ductility of steel deteriorates. Therefore, in the present invention, it is preferable to make Cu amount 1.5% or less. Cu amount is more preferably 1.3% or less, further more preferably 0.7% or less, and still further more preferably 0.4% or less. Also, when Cu amount exceeds 0.5%, by making Ni of an amount equal to or more than Cu amount exist [Ni amount (mass%)≥Cu amount (mass%)], hot brittleness by Cu can be suppressed.

Similar to Cu, Ni is an element effective in suppressing surface layer decarburization and improving corrosion resistance. In order to exert such an effect, it is preferable to make Ni amount 0.05% or more. Ni amount is more preferably 0.2% or more. However, when Ni is contained excessively, there are cases that retained austenite amount after quenching extremely increases and ductility of steel deteriorates. Therefore, in the present invention, it is preferable to make Ni amount 1.5% or less. Particularly, from the viewpoint of prevention of hot working cracking and cost reduction, Ni amount is more preferably 0.7% or less, and further more preferably 0.4% or less.

### [One or more elements selected from the group consisting of Ti: 0.10% or less (exclusive of 0%), B: 0.010% or less (exclusive of 0%), Nb: 0.10% or less (exclusive of 0%), Mo: 0.5% or less (exclusive of 0%) and V: 0.3% or less (exclusive of 0%)]

Ti is an element useful in forming sulfide with S and making S harmless. Further, Ti also has an effect of forming carbonitride and refining the microstructure. In order to exert such effects, it is preferable to contain Ti of 0.02% or more. Ti amount is more preferably 0.05% or more. However, when Ti amount becomes excessively high, there is a case that coarse Ti-sulfide is formed and ductility deteriorates. Therefore, in the present invention, it is preferable to make Ti amount 0.10% or less. From the viewpoint of the cost reduction, it is more preferable to suppress Ti amount to 0.07% or less.

B is a quenchability improving element. Further, B has an effect of strengthening the austenitic grain boundary, and is also an element contributing to suppression of fracture. In order to exert such an effect, B amount is preferably 0.0005% or more, and more preferably 0.0010% or more. However, even when B is added excessively, the effects described above saturate, and therefore B amount is preferably 0.010% or less. B amount is more preferably 0.0050% or less.

Nb is an element forming carbonitride with C and N, and contributing mainly to refinement of the microstructure. In order to exert such an effect, Nb amount is preferably 0.003% or more, and more preferably 0.005% or more. However, when Nb amount becomes excessive, coarse carbonitride is formed, and ductility (coiling performance) of steel deteriorates. Therefore, Nb amount is preferably 0.10% or less. From the viewpoint of the cost reduction, it is more preferable to suppress Nb amount to 0.07% or less.

Similar to Nb described above, Mo is an element forming carbonitride with C and N, and contributing to refinement of the microstructure. Further, Mo is also an element effective in securing the strength after tempering. In order to fully exert such effects, Mo amount is preferably 0.15% or more, and more preferably 0.20% or more. However, when Mo amount becomes excessive, coarse carbonitride is formed, and ductility (coiling performance) of steel deteriorates. Therefore, Mo amount is preferably 0.5% or less, and more preferably 0.4% or less.

V is an element effectively acting on high strengthening of steel by precipitation strengthening. Also, V is an element contributing to increase of toughness and improvement of setting resistance, and improving strength and proof stress ratio by refining the grain. In order to exert such effects, V amount is preferably 0.03% or more, more preferably 0.05% or more, and further more preferably 0.10% or more. However, when V amount becomes excessive, coarse carbonitride is formed, and toughness and corrosion fatigue property deteriorate. Therefore, V amount is preferably 0.3% or less. V amount is more preferably 0.25% or less, further more preferably 0.22% or less, and still further more preferably 0.20% or less.

Next, a method for manufacturing the steel wire for spring of the present invention will be described.

### [Manufacturing method]

In order to easily secure the microstructure described above of the steel wire for spring of the present invention, it is necessary for example to smelt steel, to obtain a steel wire thereafter by rolling, to execute drawing work thereafter, and then, in the step of quenching and tempering treatment, to execute the quenching and tempering treatment by procedures described below.

The steel wire for spring of the present invention is to contain a constant amount of retained austenite. This retained austenite is a microstructure existing more than a little in general when carbon steel is quenched. As prior arts, when C amount and an alloy component are increased in order to high strengthen the steel, retained austenite existing in quenching increases and becomes hard to be decomposed in tempering, and retained austenite can be secured. However, in the present invention, the alloy element effective in securing retained austenite is not made indispensable. In the present invention, in the manufacturing step of the steel wire for spring, high strengthening and to secure retained austenite are intended by executing quenching and tempering in a condition described below (particularly, to execute quick heating/heating for a short time in quenching and tempering) using a high frequency heating apparatus after drawing. In the present invention, by executing quenching and tempering described below using high frequency heating as described above, prior austenitic grain can be easily refined.

### [Quenching step]

### (Average temperature raising rate (HR1) from 100°C to heating temperature (T1) for quenching: 40°C/s or more)

When the average temperature raising rate (HR1) from 100°C to heating temperature (T1) for quenching is slower than 40°C/s, prior austenitic grain is coarsened, and the properties (coiling performance and hydrogen embrittlement resistance) deteriorate. Therefore, HR1 described above is made 40°C/s or more. HR1 described above is preferably 50°C/s or more, and more preferably 100°C/s or more. On the other hand, the upper limit of HR1 described above is made approximately 400°C/s from the viewpoint of the temperature control.

Also, the average temperature raising rate from the room temperature to 100°C is not particularly limited.

### (Heating temperature (T1) for quenching: 850-1,000°C)

When the heating temperature (T1) for quenching is higher than 1,000°C, prior austenite grain is coarsened, and the properties (coiling performance and hydrogen embrittlement resistance) deteriorate. Therefore, T1 described above is made 1,000°C or below. T1 described above is preferably 980°C or below, and more preferably 930°C or below. On the other hand, when T1 described above is lower than 850°C, carbide is not solid-solutionized sufficiently, and austenitizing cannot be effected sufficiently. As a result, in this quenching and tempering step, the tempered martensite microstructure cannot be secured sufficiently, and high strength cannot be obtained. Therefore, T1 described above is made 850°C or above. T1 described above is preferably 870°C or above, and more preferably 900°C or above.

### (Holding time (t1) at heating temperature for quenching: 90 seconds or less)

When the holding time (t1) at the heating temperature (T1) for quenching is longer than 90 s, the prior austenitic grain is coarsened, and the properties (coiling performance and hydrogen embrittlement resistance) deteriorate. Therefore, t1 described above is made 90 seconds or less. t1 described above is preferably 60 seconds or less, and more preferably 40 seconds or less.

Also, in order to prevent shortage of austenitizing because of insufficient melting of carbide and to obtain a stipulated microstructure (a microstructure mainly of tempered martensite and containing a stipulated amount of retained austenite), it is preferable to make this t1 5 seconds or more. t1 described above is more preferably 10 seconds or more, and further more preferably 15 seconds or more.

### (Average cooling rate from 300°C to 80°C (CR1): 5-30°C/s)

When the average cooling rate (CR1) from 300°C to 80°C after heating for quenching is faster than 30°C/s, martensitic transformation progresses, and the retained austenite amount after tempering becomes less than the lower limit value of the stipulated range. Therefore, in the present invention, CR1 described above is made 30°C/s or less. CR1 described above is preferably 25°C/s or less, and more preferably 20°C/s or less. On the other hand, when CR1 described above is excessively slow, the retained austenite amount becomes larger than the upper limit of the stipulated range, and deterioration of coiling performance and hydrogen embrittlement resistance is incurred as described above. Therefore, in the present invention, CR1 described above is made 5°C/s or more. CR1 described above is preferably 10°C/s or more, and more preferably 15°C/s or more.

Although water cooling (immersion into a water tank, and so on), spray cooling, mist cooling, cooling by He gas, and the like can be cited as a cooling method, because the present invention is for manufacturing at a low cost and the average cooling rate from 300°C to 80°C (CR1 described above) should be controlled to within the range described above, with respect to cooling in quenching, spray cooling and mist cooling are employed, and a method of adjusting the water amount of the spray and mist is preferable.

In the present invention, as described above, the cooling rate in quenching is controlled to comparatively slow, and retained austenite is secured. On the other hand, in Patent Literature 1, cooling is executed to 200°C or below with the average cooling rate CR1 after heating for quenching being made 30 K/s or more, and the retained austenite amount is as small as 5% or less in terms of the volume ratio. Further, also in Patent Literatures 2 and 5, cooling in quenching and tempering is by water cooling, also in Patent Literature 3, cooling after quenching is water cooling, and therefore, in all the cases, the concept is not that cooling in quenching is controlled to secure retained austenite.

Also, in the temperature range higher than the cooling temperature range (300-80°C) with CR1 described above which is 700°C to 300°C after heating to and holding at T1 described above, it is preferable to execute cooling with the average cooling rate of 50°C/s or more for quenching. As a method for the cooling, water cooling, spray cooling, mist cooling and the like can be cited for example.

### [Tempering step]

### (Average temperature raising rate (HR2) from 100°C to heating temperature (T2) for tempering: 30°C/s or more)

When the average temperature raising rate (HR2) described above is slow, retained austenite is decomposed and reduces, and retained austenite of the stipulated amount cannot be secured. Therefore, in the present invention, HR2 described above is made 30°C/s or more. HR2 described above is preferably 40°C/s or more, and more preferably 50°C/s or more. On the other hand, when the average temperature raising rate (HR2) described above is excessively fast, temperature control becomes difficult, and dispersion of the strength is liable to occur. Therefore, HR2 described above is preferably 300°C/s or less, and more preferably 200°C/s or less.

Also, the average temperature raising rate from the room temperature to 100°C is not particularly in question.

### (Heating temperature (T2) for tempering: 350-550°C)

When the heating temperature (T2) for tempering is excessively low, tempering becomes insufficient, the strength excessively increases, and such a problem that the reduction of area extremely deteriorates occurs. Therefore, T2 described above is made 350°C or above. On the other hand, when T2 described above exceeds 550°C, it becomes hard to achieve the tensile strength of 1,900 MPa or more. Therefore, T2 described above is made 550°C or below. The optimum range of the heating temperature for tempering (T2 described above) can be determined appropriately within the range of 350-550°C according to the required strength.

### (Holding time (t2) at heating temperature for tempering: 5-90 s)

When the holding time (t2) at the heating temperature (T2) for tempering is longer than 90 s, retained γ is decomposed, and retained γ of the stipulated amount cannot be obtained. t2 described above is preferably 70 seconds or less, more preferably 50 seconds or less, further more preferably 40 seconds or less, and still further more preferably 12 seconds or less. On the other hand, the present invention is on the premise of executing high frequency heating, and, when t2 described above is excessively short, in the case of the steel wire with a large diameter, hardness dispersion within the cross section in the circumferential direction is liable to occur, and it becomes hard to effect stable improvement of the strength. Therefore, in the present invention, t2 described above is made 5 seconds or more. t2 described above is preferably 7 seconds or more, and more preferably 10 seconds or more.

Also, t2 described above can be adjusted appropriately within the range described above according to the required strength.

### (Average cooling rate from T2 (however, it is 400°C when T2 is 400°C or above) to 100°C (CR2): 30°C/s or more)

When the average cooling rate (CR2) from T2 described above (however, it is 400°C when T2 described above is 400°C or above) to 100°C after heating for tempering is slow, retained austenite is decomposed and reduces, and retained austenite of the stipulated amount cannot be secured. Therefore, in the present invention, the average cooling rate (CR2 described above) is made 30°C/s or more. CR2 described above is preferably 40°C/s or more, and more preferably 50°C/s or more. Also, the upper limit of CR2 described above is approximately 300°C/s.

As a method for cooling described above, water cooling, mist cooling and the like can be cited. Also, the average cooling rate from 100°C to the room temperature is not particularly limited.

With respect to the steel wire for spring of the present invention satisfying the chemical composition and the microstructure described above, the tensile strength is 1,900 MPa or more, and the reduction of area measured by the tensile test described below is 45% or more. The reduction of area measured by this tensile test is one of the indicators expressing the ductility of the material. As this reduction of area increases, the ductility increases, fracture during formation of the spring hardly occurs, and therefore the coiling performance becomes excellent.

Because the steel wire for spring of the present invention has high strength and is excellent in coiling performance and hydrogen embrittlement resistance as described above, it is suitable as a steel wire for cold formed spring (particularly steel wire for suspension spring). Using the steel wire for spring of the present invention, a coil spring (for example a valve spring, suspension spring and the like used for an engine, suspension and the like) having high strength and excellent in hydrogen embrittlement resistance can be achieved.

The present application is to claim the benefit of the right of priority based on the Japanese Patent Application No. 2012-124581 applied on May 31, 2012 and the Japanese Patent Application No. 2013-044766 applied on March 6, 2013. Entire contents of the specification of the Japanese Patent Application No. 2012-124581 applied on May 31, 2012 and entire contents of the specification of the Japanese Patent Application No. 2013-044766 applied on March 6, 2013 are incorporated by reference into the present application.

### [Examples]

Although the present invention will be described below more specifically referring to examples, the present invention is not to be limited by the examples below, it is a matter of course that the present invention can also be implemented with modifications being appropriately added within the range adaptable to the purposes described above and below, and any of them is to be included within the technical range of the present invention.

Steel with the chemical composition shown in Table 1 and Table 2 was smelted by a small size vacuum melting furnace, was forged into a billet of 155 mm square, and was thereafter hot rolled, and thereby a wire rod with 14.3 mm diameter was obtained. Then, the wire rod was subjected to drawing work (wire drawing) to 13.0 mm diameter with the area reduction rate of 17%, and was thereafter quenched and tempered in a high frequency induction heating furnace under the conditions shown in Table 3 and Table 4 to obtain a steel wire for spring.

Quenching described above was executed as follows, which means, the wire rod was heated from 100°C to the heating temperature (T1) for quenching shown in Table 3 and Table 4 with the average temperature raising rate (HR1) shown in Table 3 and Table 4, and was held at T1 described above (the holding time (t1) was as shown in Table3 and Table 4). Thereafter, in any example, from the heating temperature (T1) to 300°C, the wire rod was cooled with 50°C/s or more by spray cooling, and, from 300°C to 80°C, the wire rod was cooled with the average cooling rate (CR1) shown in Table 3 and Table 4 respectively. This cooling from 300°C to 80°C was executed by spray cooling, or immersion into a water tank, or, in a part of the examples, by cooling using He gas (experimental scale). Also, natural cooling was employed from 80°C to the room temperature.

Next, tempering was executed as follows. Specifically, the wire rod was heated from 100°C to the temperature range (T2) of 350-550°C with the average temperature raising rate (HR2) shown in Table 3 and Table 4, and was held at T2 described above (the holding time (t2) was as shown in Table 3 and Table 4). Thereafter, the wire rod was cooled from T2 described above (however, it is 400°C when T2 is 400°C or above) to 100° with the average cooling rate (CR2) shown in Table 3 and Table 4. This cooling was executed by spray cooling. Also, natural cooling was employed from 100°C to the room temperature. Further, because the heating temperature (T2) for tempering described above was changed between Nos. 45-69 and Nos. 70-94 in table 4, as shown in Table 6 below, the steel wires for spring different in strength and the like were obtained.

**[Table 1]**

| Steel mark | Chemical composition (mass%); the remainder consisting of iron and inevitable impurities | | | | | | | | | | | |
|---|---|---|---|---|---|---|---|---|---|---|---|---|
| | C | Si | Mn | P | S | Al | Cu | Ni | Ti | B | Nb | Mo |
| A | 0.54 | 1.5 | 0.7 | 0.009 | 0.007 | 0.003 | - | - | - | - | - | - |
| B | 0.42 | 1.4 | 0.6 | 0.006 | 0.009 | 0.005 | - | - | - | - | - | - |
| C | 0.59 | 1.0 | 1.3 | 0.006 | 0.009 | 0.004 | 0.5 | 0.6 | - | - | - | - |
| D | 0.64 | 1.2 | 1.2 | 0.009 | 0.007 | 0.003 | 0.7 | 0.6 | - | - | - | - |
| E | 0.70 | 1.5 | 1.0 | 0.0012 | 0.0011 | 0.020 | - | - | - | - | - | - |
| F | 0.56 | 2.5 | 1.0 | 0.009 | 0.007 | 0.004 | - | - | - | - | - | - |
| G | 0.58 | 1.5 | 1.6 | 0.009 | 0.007 | 0.003 | - | - | - | - | - | - |
| H | 0.57 | 1.5 | 2.2 | 0.009 | 0.007 | 0.002 | - | - | - | - | - | - |
| I | 0.57 | 1.5 | 1.0 | 0.020 | 0.007 | 0.004 | - | - | - | - | - | - |
| J | 0.58 | 1.4 | 0.9 | 0.009 | 0.020 | 0.003 | - | - | - | - | - | - |
| K | 0.58 | 1.4 | 1.1 | 0.0011 | 0.007 | 0.003 | 1.3 | - | - | - | - | - |
| L | 0.56 | 1.3 | 0.9 | 0.005 | 0.007 | 0.015 | - | 1.3 | - | - | - | - |
| M | 0.57 | 1.4 | 1.2 | 0.0011 | 0.005 | 0.004 | - | - | 0.07 | - | - | - |
| N | 0.57 | 1.3 | 1.1 | 0.0012 | 0.0011 | 0.004 | - | - | - | 0.0020 | - | - |
| O | 0.58 | 1.4 | 1.1 | 0.008 | 0.007 | 0.070 | - | - | - | - | - | - |
| P | 0.57 | 1.3 | 0.9 | 0.007 | 0.007 | 0.005 | - | - | - | - | 0.07 | - |
| Q | 0.57 | 1.5 | 1.0 | 0.0012 | 0.007 | 0.002 | - | - | - | - | 0.12 | - |
| R | 0.58 | 1.5 | 1.0 | 0.009 | 0.007 | 0.003 | - | - | - | - | - | 0.4 |

**[Table 2]**

| Steel mark | Chemical composition (mass%); the remainder consisting of iron and inevitable impurities | | | | | | | | | | | | |
|---|---|---|---|---|---|---|---|---|---|---|---|---|---|
| | C | Si | Mn | P | S | Al | Cu | Ni | Ti | B | Nb | Mo | V |
| a | 0.58 | 1.8 | 1.1 | 0.008 | 0.005 | 0.030 | 0.20 | 0.20 | - | 0.0020 | - | - | - |
| b | 0.58 | 2.0 | 0.9 | 0.009 | 0.007 | 0.005 | 0.15 | 0.15 | - | 0.0025 | - | - | - |
| c | 0.58 | 2.2 | 0.6 | 0.007 | 0.006 | 0.020 | 0.20 | 0.20 | - | 0.0020 | - | - | - |
| d | 0.60 | 1.8 | 1.1 | 0.007 | 0.006 | 0.030 | 0.15 | 0.15 | - | 0.0032 | - | - | - |
| e | 0.60 | 2.0 | 0.9 | 0.006 | 0.009 | 0.003 | 0.10 | 0.10 | - | 0.0020 | - | - | - |
| f | 0.60 | 2.0 | 0.9 | 0.008 | 0.009 | 0.004 | 0.15 | 0.15 | - | 0.0025 | - | - | - |
| g | 0.60 | 2.0 | 0.9 | 0.007 | 0.006 | 0.004 | 0.20 | 0.20 | - | 0.0040 | - | - | - |
| h | 0.60 | 20 | 0.6 | 0.007 | 0.006 | 0.004 | 0.20 | 0.20 | - | 0.0040 | - | - | - |
| i | 0.60 | 2.0 | 1.0 | 0.008 | 0.009 | 0.030 | 0.30 | 0.30 | - | 0.0028 | - | - | - |
| j | 0.60 | 2.0 | 0.8 | 0.007 | 0.007 | 0.040 | 0.50 | 0.50 | - | 0.0035 | - | - | - |
| k | 0.60 | 2.2 | 0.7 | 0.006 | 0.009 | 0.020 | 0.30 | 0.30 | - | 0.0025 | - | - | - |
| l | 0.62 | 1.8 | 1.1 | 0.007 | 0.007 | 0.004 | 0.15 | 0.15 | - | 0.0020 | - | - | - |
| m | 0.62 | 2.0 | 0.9 | 0.007 | 0.007 | 0.030 | 0.30 | 0.30 | - | 0.0035 | - | - | - |
| n | 0.62 | 2.2 | 0.7 | 0.008 | 0.005 | 0.020 | 0.35 | 0.35 | - | 0.0020 | - | - | - |
| o | 0.60 | 2.0 | 0.9 | 0.007 | 0.006 | 0.004 | 0.20 | 0.20 | 0.03 | 0.0025 | - | - | - |
| p | 0.60 | 2.0 | 0.7 | 0.005 | 0.007 | 0.030 | 0.20 | 0.20 | 0.09 | 0.0025 | - | - | - |
| q | 0.60 | 2.0 | 0.6 | 0.0011 | 0.005 | 0.030 | 0.20 | 0.20 | - | 0.0025 | 0.03 | - | - |
| r | 0.60 | 2.0 | 0.9 | 0.007 | 0.006 | 0.004 | 0.20 | 0.20 | - | 0.0025 | 0.09 | - | - |
| s | 0.60 | 2.0 | 0.9 | 0.007 | 0.006 | 0.004 | 0.20 | 0.20 | - | 0.0025 | - | 0.1 | - |
| t | 0.60 | 2.0 | 0.9 | 0.007 | 0.006 | 0.004 | 0.20 | 0.20 | - | 0.0025 | - | 0.4 | - |
| u | 0.60 | 2.0 | 0.9 | 0.006 | 0.007 | 0.004 | 0.20 | 0.20 | - | 0.0025 | - | - | 0.04 |
| v | 0.60 | 2.0 | 0.9 | 0.007 | 0.009 | 0.030 | 0.20 | 0.20 | - | 0.0025 | - | - | 0.09 |
| w | 0.60 | 2.0 | 0.8 | 0.006 | 0.007 | 0.03 0 | 0.20 | 0.20 | 0.05 | - | - | - | - |
| x | 0.60 | 2.0 | 0.9 | 0.006 | 0.009 | 0.004 | 0.15 | 0.15 | - | - | - | - | - |
| y | 0.60 | 2.1 | 0.7 | 0.007 | 0.006 | 0.004 | 0.30 | 0.30 | - | - | - | - | - |

**[Table 3]**

| Example No. | Steel mark | Quenching | | | | Tempering | | |
|---|---|---|---|---|---|---|---|---|
| | | Average temperature raising rate | Heating temperature | Holding time | Average cooling rate | Average temperature raising rate | Holding time | Average cooling rate |
| | | HR1 (°C/s) | T1 (°C) | t1 (sec) | CR1 (°C/s) | HR2 (°C/s) | t2 (sec) | CR2 (°C/s) |
| 1 | A | 200 | 950 | 30 | 20 | 100 | 30 | 100 |
| 2 | B | 200 | 950 | 30 | 20 | 100 | 30 | 100 |
| 3 | C | 200 | 950 | 30 | 20 | 100 | 30 | 100 |
| 4 | D | 200 | 950 | 30 | 20 | 100 | 30 | 100 |
| 5 | E | 200 | 950 | 30 | 20 | 100 | 30 | 100 |
| 6 | F | 200 | 950 | 30 | 20 | 100 | 30 | 100 |
| 7 | G | 200 | 950 | 30 | 20 | 100 | 30 | 100 |
| 9 | H | 200 | 950 | 30 | 20 | 100 | 30 | 100 |
| 8 | I | 200 | 950 | 30 | 20 | 100 | 30 | 100 |
| 10 | J | 200 | 950 | 30 | 20 | 100 | 30 | 100 |
| 11 | K | 200 | 950 | 30 | 20 | 100 | 30 | 100 |
| 12 | L | 200 | 950 | 30 | 20 | 100 | 30 | 100 |
| 13 | M | 200 | 950 | 30 | 20 | 100 | 30 | 100 |
| 14 | N | 200 | 950 | 30 | 20 | 100 | 30 | 100 |
| 15 | O | 200 | 950 | 30 | 20 | 100 | 30 | 100 |
| 16 | P | 200 | 950 | 30 | 20 | 100 | 30 | 100 |
| 17 | Q | 200 | 950 | 30 | 20 | 100 | 30 | 100 |
| 18 | R | 200 | 950 | 30 | 20 | 100 | 30 | 100 |
| 19 | A | 100 | 950 | 30 | 20 | 100 | 30 | 100 |
| 20 | A | 50 | 950 | 30 | 20 | 100 | 30 | 100 |
| 21 | A | 40 | 960 | 30 | 20 | 100 | 30 | 100 |
| 22 | A | 30 | 950 | 30 | 20 | 100 | 30 | 100 |
| 23 | A | 200 | 1200 | 30 | 20 | 100 | 30 | 100 |
| 24 | A | 200 | 1100 | 30 | 20 | 100 | 30 | 100 |
| 25 | A | 200 | 1000 | 30 | 20 | 100 | 30 | 100 |
| 26 | A | 200 | 900 | 30 | 20 | 100 | 30 | 100 |
| 27 | A | 200 | 950 | 30 min | 20 | 100 | 30 | 100 |
| 28 | A | 200 | 950 | 60 | 20 | 100 | 30 | 100 |
| 29 | A | 200 | 950 | 5 | 20 | 100 | 30 | 100 |
| 30 | A | 200 | 950 | 30 | 60 | 100 | 30 | 100 |
| 31 | A | 200 | 950 | 30 | 50 | 100 | 30 | 100 |
| 32 | A | 200 | 950 | 30 | 40 | 100 | 30 | 100 |
| 33 | A | 200 | 950 | 30 | 30 | 100 | 30 | 100 |
| 34 | A | 200 | 950 | 30 | 10 | 100 | 30 | 100 |
| 35 | A | 200 | 950 | 30 | 5 | 100 | 30 | 100 |
| 36 | A | 200 | 950 | 30 | 2 | 100 | 30 | 100 |
| 37 | A | 200 | 950 | 30 | 20 | 40 | 30 | 100 |
| 38 | A | 200 | 950 | 30 | 20 | 30 | 30 | 100 |
| 39 | A | 200 | 950 | 30 | 20 | 10 | 30 | 100 |
| 40 | A | 200 | 950 | 30 | 20 | 100 | 30 min | 100 |
| 41 | A | 200 | 950 | 30 | 20 | 100 | 30 | 50 |
| 42 | A | 200 | 950 | | 20 | 100 | 30 | 10 |
| 43 | A | 200 | 950 | 150 | 20 | 100 | 30 | 100 |
| 44 | A | 200 | 950 | 30 | 20 | 100 | 150 | 100 |

**[Table 4]**

| Example No. | Steel mark | Quenching | | | | Tempering | | |
|---|---|---|---|---|---|---|---|---|
| | | Average temperature raising rate | Heating temperature | Hold ing time | Average cooling rate | Average temperature raising rate | Holding time | Average cooling rate |
| | | HR1 (°C/s) | T1 (°C) | t1 (sec) | CR1 (°C/s) | HR2 (°C/s) | t2 (sec) | CR2 (°C/s) |
| 45 | a | 200 | 930 | 30 | 25 | 100 | 30 | 100 |
| 46 | b | 200 | 930 | 0 | 25 | 100 | 30 | 100 |
| 47 | c | 200 | 930 | 30 | 25 | 100 | 30 | 100 |
| 48 | d | 200 | 930 | 30 | 25 | 100 | 30 | 100 |
| 49 | e | 200 | 930 | 30 | 25 | 100 | 30 | 100 |
| 50 | f | 200 | 930 | 30 | 25 | 100 | 30 | 100 |
| 51 | g | 200 | 930 | 30 | 25 | 100 | 30 | 100 |
| 52 | h | 200 | 930 | 30 | 25 | 100 | 30 | 100 |
| 53 | i | 200 | 930 | 30 | 25 | 100 | 30 | 100 |
| 54 | i | 200 | 930 | 30 | 25 | 100 | 30 | 100 |
| 55 | k | 200 | 930 | 30 | 25 | 100 | 30 | 100 |
| 58 | l | 200 | 930 | 30 | 25 | 100 | 30 | 100 |
| 57 | m | 200 | 930 | 30 | 25 | 100 | 30 | 100 |
| 58 | n | 200 | 930 | 30 | 25 | 100 | 30 | 100 |
| 59 | o | 200 | 930 | 30 | 25 | 100 | 30 | 100 |
| 60 | p | 200 | 930 | 30 | 25 | 100 | 30 | 100 |
| 61 | q | 200 | 930 | 30 | 25 | 100 | 30 | 100 |
| 62 | r | 200 | 930 | 30 | 25 | 100 | 30 | 100 |
| 63 | s | 200 | 930 | 30 | 25 | 100 | 30 | 100 |
| 64 | t | 200 | 930 | 30 | 25 | 100 | 30 | 100 |
| 65 | u | 200 | 930 | 30 | 25 | 100 | 30 | 100 |
| 66 | v | 200 | 930 | 30 | 25 | 100 | 30 | 100 |
| 67 | w | 200 | 930 | 30 | 25 | 100 | 30 | 100 |
| 68 | x | 200 | 930 | 30 | 25 | 100 | 30 | 100 |
| 69 | y | 200 | 930 | 30 | 25 | 100 | 30 | 100 |
| 70 | a | 200 | 930 | 30 | 25 | 100 | 30 | 100 |
| 71 | b | 200 | 930 | 30 | 25 | 100 | 30 | 100 |
| 72 | c | 200 | 930 | 30 | 25 | 100 | 30 | 100 |
| 73 | d | 200 | 930 | 30 | 25 | 100 | 30 | 100 |
| 74 | e | 200 | 930 | 30 | 25 | 100 | 30 | 100 |
| 75 | f | 200 | 930 | 30 | 25 | 100 | 30 | 100 |
| 76 | g | 200 | 930 | 30 | 25 | 100 | 30 | 100 |
| 77 | h | 200 | 930 | 30 | 25 | 100 | 30 | 100 |
| 78 | i | 200 | 930 | 30 | 25 | 100 | 30 | 100 |
| 79 | j | 200 | 930 | 30 | 25 | 100 | 30 | 100 |
| 80 | k | 200 | 930 | 30 | 25 | 100 | 30 | 100 |
| 81 | l | 200 | 930 | 30 | 25 | 100 | 30 | 100 |
| 82 | m | 200 | 930 | 30 | 25 | 100 | 30 | 100 |
| 83 | n | 200 | 930 | 30 | 25 | 100 | 30 | 100 |
| 84 | o | 200 | 930 | 30 | 25 | 100 | 30 | 100 |
| 85 | p | 200 | 930 | 30 | 25 | 100 | 30 | 100 |
| 86 | q | 200 | 930 | 30 | 25 | 100 | 30 | 100 |
| 87 | r | 200 | 930 | 30 | 25 | 100 | 30 | 100 |
| 88 | s | 200 | 930 | 30 | 25 | 100 | 30 | 100 |
| 89 | t | 200 | 930 | 30 | 25 | 100 | 30 | 100 |
| 90 | u | 200 | 930 | 30 | 25 | 100 | 30 | 100 |
| 91 | v | 200 | 930 | 30 | 25 | 100 | 30 | 100 |
| 92 | w | 200 | 930 | 30 | 25 | 100 | 30 | 100 |
| 93 | x | 200 | 930 | 30 | 25 | 100 | 30 | 100 |
| 94 | y | 200 | 930 | 30 | 25 | 100 | 30 | 100 |

Using the steel wire obtained, evaluation of the steel microstructure (measurement of the retained austenite amount and the prior austenite grain size number), evaluation of the tensile properties (measurement of the tensile strength and the reduction of area), and evaluation of the hydrogen embrittlement resistance were executed by methods described below.

### [Evaluation of steel microstructure]

### (Measurement of retained austenite amount)

The retained austenite amount was measured by X-ray diffraction. With respect to the analyzer, Two-dimensional Minute Section X-ray Diffraction Analyzer RINT-RAPID II made by Rigaku Corporation was used, and the spot diameter was made 300 µm. From the peak intensity (110) of α-Fe and the peak intensity (200) of γ-Fe, the retained austenite amount (retained γ amount) was obtained.

Further, although the retained γ amount obtained by X-ray diffraction described above is calculated as the volume ratio, the value of this volume ratio can be read as the area ratio as it is. Therefore, in the present invention, the unit of the retained γ amount is handled so as to be regarded as the area ratio.

### (Measurement of prior austenite grain size number)

The specimen was taken so that the position of D (diameter)/4 of the cross section of the steel wire (the cross section orthogonal to the axis of the steel wire for spring) became the observation surface. This specimen taken was embedded in a resin, the prior austenite grain boundary was made to appear using a picric acid-basis etching liquid after polishing, and the prior austenite grain size number was obtained according to a method stipulated in JIS G 0551.

Also, the fact that tempered martensite was 70 area% or more with respect to the total microstructure in the microstructure of all the examples was confirmed under an optical microscope of 400 magnifications.

### [Evaluation of tensile properties (evaluation of coiling performance)]

The steel wire obtained was worked into JIS No. 14 test specimen. Using the test specimen, the tensile test was executed according to JIS Z 2241 in the condition of 10 m/min of the cross head speed with a universal tester, and TS (tensile strength) and the reduction of area were measured. Also, those in which the tensile strength was 1,900 MPa or more were evaluated to have high strength. Also, those in which the reduction of area was 45% or more were evaluated to be excellent in coiling performance.

### [Evaluation of hydrogen embrittlement resistance (hydrogen embrittlement test)]

The test specimen with 10 mm width×1.5 mm thicknessx65 mm length was cut out from the steel wire. In a state the stress of 1,400 MPa was applied to the test specimen by 4 point bending, the test specimen was immersed into the mixture solution of sulfuric acid (0.5 mol/L) and potassium thiocyanate (0.01 mol/L). Also, the voltage of -700 mV that was baser than the SCE electrode was applied using a potentiostat, and the time until cracking occurred (fracture time) was measured. The case the fracture time was 700 seconds or more was evaluated to be excellent in hydrogen embrittlement resistance.

Further, with respect to the example Nos. 9, 10 and 17 of Table 5 below, because the reduction of area did not satisfy the acceptance criterion (45% or more) in evaluation of the tensile property, evaluation of hydrogen embrittlement resistance described above was not executed.

These results are shown in Table 5 and Table 6. In Table 5 and Table 6, the examples with the description of (OK) in the determination item are examples that satisfy all of the requirements stipulated in the present invention. On the other hand, the examples with the description of (NG) in the determination item are those in which any of the requirements stipulated in the present invention is not satisfied, and at least either of coiling performance and hydrogen embrittlement resistance is deteriorated.

**[Table 5]**

| Example No. | Retained γ amount | Prior γ grain size | TS | Reduction of area | Fracture time | Determination |
|---|---|---|---|---|---|---|
| | (area%) | number | (MPa) | (%) | (sec) | |
| 1 | 9 | 11.1 | 2014 | 51.5 | 912 | OK |
| 2 | 8 | 11.2 | 2008 | 52.9 | 920 | OK |
| 3 | 12 | 11.3 | 2006 | 54.5 | 1021 | OK |
| 4 | 13 | 11.2 | 2004 | 55.3 | 1011 | OK |
| 5 | 16 | 11.4 | 2003 | 42 | 650 | NG |
| 6 | 12 | 10.5 | 2004 | 48.5 | 798 | OK |
| 7 | 15 | 10.4 | 2010 | 47 | 845 | OK |
| 8 | 17 | 10.5 | 2004 | 32 | 215 | NG |
| 9 | 10 | 11.2 | 2001 | 35 | - | NG |
| 10 | 10 | 10.9 | 1995 | 38 | - | NG |
| 11 | 14 | 11.6 | 2012 | 57 | 1100 | OK |
| 12 | 14 | 11.5 | 2010 | 59 | 1098 | OK |
| 13 | 14 | 12.1 | 2009 | 57 | 1253 | OK |
| 14 | 9 | 11.5 | 2000 | 56 | 1052 | OK |
| 15 | 9 | 11.4 | 2006 | 47 | 846 | OK |
| 16 | 9 | 12.0 | 2012 | 57 | 1145 | OK |
| 17 | 9 | 11.3 | 2008 | 44 | - | NG |
| 18 | 13 | 11.6 | 2004 | 53 | 1125 | OK |
| 19 | 9 | 10.8 | 2006 | 52 | 915 | OK |
| 20 | 9 | 10.7 | 2003 | 51 | 749 | OK |
| 21 | 9 | 10.2 | 2000 | 47 | 729 | OK |
| 22 | 10 | 9.8 | 2005 | 43 | 684 | NG |
| 23 | 10 | 6.0 | 2011 | 5 | 15 | NG |
| 24 | 10 | 7.1 | 2010 | 15 | 30 | NG |
| 25 | 10 | 10.2 | 2009 | 47 | 820 | OK |
| 26 | 10 | 11.5 | 2008 | 58 | 1100 | OK |
| 27 | 10 | 8.8 | 2000 | 20 | 329 | NG |
| 28 | 10 | 10.3 | 2003 | 47 | 905 | OK |
| 29 | 11 | 11.8 | 2009 | 56 | 1186 | OK |
| 30 | 3 | 11.8 | 2008 | 38 | 546 | NG |
| 31 | 4 | 11.7 | 2006 | 41 | 550 | NG |
| 32 | 5 | 11.5 | 2012 | 45 | 586 | NG |
| 33 | 6 | 11.4 | 2015 | 52 | 1032 | OK |
| 34 | 11 | 11.4 | 2005 | 58 | 1098 | OK |
| 35 | 15 | 11.0 | 2003 | 57 | 859 | OK |
| 36 | 16 | 11.0 | 2001 | 44 | 680 | NG |
| 37 | 7 | 11.2 | 1997 | 57 | 855 | OK |
| 38 | 6 | 10.8 | 2009 | 45 | 780 | OK |
| 39 | 5 | 11.0 | 2015 | 21 | 524 | NG |
| 40 | 3 | 11.0 | 2015 | 9 | 56 | NG |
| 41 | 7 | 11.2 | 2015 | 48 | 825 | OK |
| 42 | 4 | 10.9 | 2015 | 25 | 355 | NG |
| 43 | 10 | 9.5 | 2005 | 38 | 556 | NG |
| 44 | 3 | 11.0 | 2004 | 22 | 330 | NG |

| | | | | | | |
|---|---|---|---|---|---|---|
| "-" in the table expresses that measurement was not executed. | | | | | | |

**[Table 6]**

| Example No. | Retained γ amount (area%) | Prior γ grain size number | TS (MPa) | Reduction of area (%) | Fracture time (sec) | Determination |
|---|---|---|---|---|---|---|
| 45 | 9 | 10.3 | 2022 | 53 | 1371 | OK |
| 46 | 8 | 10.4 | 2011 | 53 | 1459 | OK |
| 47 | 8 | 10.3 | 2024 | 52 | 1551 | OK |
| 48 | 9 | 10.6 | 2018 | 51 | 1441 | OK |
| 49 | 8 | 10.8 | 2023 | 53 | 1555 | OK |
| 50 | 8 | 10.5 | 2008 | 50 | 1554 | OK |
| 51 | 8 | 10.2 | 2016 | 53 | 1538 | OK |
| 52 | 8 | 10.2 | 2007 | 52 | 1535 | OK |
| 53 | 9 | 10.3 | 2022 | 51 | 1538 | OK |
| 54 | 8 | 10.5 | 1996 | 50 | 1560 | OK |
| 55 | 8 | 10.2 | 2019 | 52 | 1647 | OK |
| 56 | 9 | 10.2 | 2007 | 51 | 1518 | OK |
| 57 | 9 | 10.2 | 2020 | 52 | 1638 | OK |
| 58 | 8 | 10.3 | 2013 | 52 | 1712 | OK |
| 59 | 9 | 10.9 | 2018 | 50 | 1588 | OK |
| 60 | 8 | 11.8 | 2016 | 50 | 1665 | OK |
| 61 | 8 | 10.6 | 2002 | 52 | 1578 | OK |
| 62 | 9 | 11.2 | 2023 | 51 | 1548 | OK |
| 63 | 9 | 10.5 | 1995 | 53 | 1577 | OK |
| 64 | 9 | 11.0 | 2002 | 52 | 1598 | OK |
| 65 | 9 | 10.6 | 2017 | 51 | 1546 | OK |
| 66 | 9 | 11.2 | 2010 | 53 | 1588 | OK |
| 67 | 9 | 10.9 | 2008 | 53 | 1564 | OK |
| 68 | 9 | 10.3 | 2001 | 53 | 1559 | OK |
| 69 | 9 | 10.3 | 1998 | 50 | 1592 | OK |
| 70 | 10 | 10.3 | 2114 | 49 | 884 | OK |
| 71 | 10 | 10.4 | 2118 | 50 | 962 | OK |
| 72 | 9 | 10.3 | 2121 | 49 | 1059 | OK |
| 73 | 11 | 10.6 | 2122 | 48 | 938 | OK |
| 74 | 9 | 10.8 | 2116 | 49 | 1058 | OK |
| 75 | 10 | 10.5 | 2119 | 46 | 1060 | OK |
| 76 | 10 | 10.2 | 2107 | 50 | 1041 | OK |
| 77 | 9 | 10.2 | 2105 | 49 | 1039 | OK |
| 78 | 11 | 10.3 | 2108 | 48 | 1041 | OK |
| 79 | 10 | 10.5 | 2104 | 47 | 1043 | OK |
| 80 | 9 | 10.2 | 2110 | 49 | 1146 | OK |
| 81 | 11 | 10.2 | 2120 | 47 | 1027 | OK |
| 82 | 10 | 10.2 | 2111 | 48 | 1115 | OK |
| 83 | 10 | 10.3 | 2117 | 49 | 1228 | OK |
| 84 | 10 | 10.9 | 2109 | 46 | 1035 | OK |
| 85 | 10 | 11.6 | 2120 | 47 | 1070 | OK |
| 86 | 9 | 10.6 | 2108 | 49 | 1034 | OK |
| 87 | 11 | 11.2 | 2122 | 48 | 1110 | OK |
| 88 | 10 | 10.5 | 2119 | 50 | 1055 | OK |
| 89 | 11 | 11 | 2107 | 49 | 1048 | OK |
| 90 | 10 | 10.6 | 2110 | 47 | 1042 | OK |
| 91 | 11 | 11.2 | 2108 | 49 | 1056 | OK |
| 92 | 9 | 10.9 | 2109 | 49 | 1046 | OK |
| 93 | 9 | 10.3 | 2121 | 49 | 1055 | OK |
| 94 | 9 | 10.3 | 2100 | 47 | 1101 | OK |

From Tables 1-6, following consideration can be made (the No. below expresses the example No. of Tables 3-6). More specifically, Nos. 1-4, 6, 7, 11-16, 18-21, 25, 26, 28, 29, 33-35, 37, 38, 41 and 45-94 satisfy the requirements stipulated in the present invention, have high strength, and are excellent in coiling performance and hydrogen embrittlement resistance.

On the other hand, in Nos. 5, 8-10 and 17, because the stipulated chemical composition was not satisfied, at least either of coiling performance and hydrogen embrittlement resistance deteriorated. The details are as follows.

First, in No. 5, because C amount was excessive, the retained austenite amount after quenching and tempering became excessive, and coiling performance and hydrogen embrittlement resistance deteriorated.

In No. 8, because Mn amount was excessive, the retained austenite amount after quenching and tempering became excessive, and coiling performance and hydrogen embrittlement resistance deteriorated.

In No. 9, because P amount was excessive, in No. 10, because S amount was excessive, and in No. 17, because Nb amount was excessive, in all of these cases, the reduction of area was small, and coiling performance deteriorated.

Nos. 22-24, 27, 30-32, 36, 39, 40 and 42-44 are examples in which the steel with the stipulated chemical composition was used, but quenching and tempering were not executed in the stipulated condition in the manufacturing step. In these examples, the stipulated microstructure was not obtained, and as a result, coiling performance and hydrogen embrittlement resistance deteriorated. The details are as follows.

First, in No. 22, because the average temperature raising rate (HR1) from 100°C to the heating temperature (T1) for quenching was slow, coarsening of the prior austenite grain occurred, and as a result, coiling performance and hydrogen embrittlement resistance deteriorated.

In both of Nos. 23 and 24, because the heating temperature (T1) for quenching was excessively high, coarsening of the prior austenite grain occurred, and as a result, coiling performance and hydrogen embrittlement resistance deteriorated.

In Nos. 27 and 43, because the holding time (t1) at the heating temperature for quenching was excessively long, coarsening of the prior austenite grain occurred, and as a result, coiling performance and hydrogen embrittlement resistance deteriorated.

Although Nos. 30-32 are examples in which quenching was executed in a general condition, because the average cooling rate (CR1) in quenching was excessively fast, retained austenite of the stipulated amount could not be secured, and at least either of coiling performance and hydrogen embrittlement resistance deteriorated.

In No. 36, because the average cooling rate (CR1) in quenching was excessively slow, the retained austenite amount became excessive, and as a result, coiling performance and hydrogen embrittlement resistance deteriorated.

In No. 39, because the average temperature raising rate (HR2) in tempering was excessively slow, prior austenite was decomposed, prior austenite of the stipulated amount could not be secured, and coiling performance and hydrogen embrittlement resistance deteriorated.

In Nos. 40 and 44, because the holding time (t2) at the heating temperature for tempering was excessively long, prior austenite was decomposed, prior austenite of the stipulated amount could not be secured, and coiling performance and hydrogen embrittlement resistance deteriorated.

In No. 42, because the average cooling rate (CR2) in tempering was excessively slow, prior austenite was decomposed, prior austenite of the stipulated amount could not be secured, and coiling performance and hydrogen embrittlement resistance deteriorated.

## Claims

1. A high strength steel wire for spring excellent in coiling performance and hydrogen embrittlement resistance, wherein:
C: 0.40-0.65% (means mass%, hereinafter the same with respect to the chemical composition);
Si: 1.0-3.0%;
Mn: 0.6-2.0%;
P: 0.015% or less (exclusive of 0%);
S: 0.015% or less (exclusive of 0%); and
Al: 0.001-0.10% are satisfied, and the remainder consists of iron and inevitable impurities;
tempered martensite: 70 area% or more, and
retained austenite: 6-15 area% with respect to all microstructures are satisfied;
prior austenite grain size number obtained by a method stipulated in JIS G 0551 is No. 10.0 or more; and
tensile strength is 1,900 MPa or more.

2. The high strength steel wire for spring according to claim 1, further containing one or more elements selected from the group consisting of:
Cu: 0.05-1.5%; and
Ni: 0.05-1.5%.

3. The high strength steel wire for spring according to claim 1, further containing one or more elements selected from the group consisting of:
Ti: 0.10% or less (exclusive of 0%);
B: 0.010% or less (exclusive of 0%);
Nb: 0.10% or less (exclusive of 0%);
Mo: 0.5% or less (exclusive of 0%); and
V: 0.3% or less (exclusive of 0%).

4. A spring obtained using the high strength steel wire for spring according to any of claims 1-3.

5. A method for manufacturing the high strength steel wire for spring excellent in coiling performance and hydrogen embrittlement resistance according to any of claims 1-3 comprising the steps of:
using steel satisfying the composition according to any of claims 1-3; and
executing quenching and tempering executed after drawing so as to satisfy all of quenching conditions and tempering conditions below.
(Quenching conditions)
• Average temperature raising rate (HR1) from 100°C to heating temperature (T1) for quenching shown below: 40°C/s or more
• Heating temperature (T1) for quenching: 850-1,000°C
• Holding time (t1) at heating temperature for quenching: 90 seconds or less
• Average cooling rate (CR1) from 300°C to 80°C after heating for quenching: 5-30°C/s
(Tempering conditions)
• Average temperature raising rate (HR2) from 100°C to heating temperature (T2) for tempering shown below: 30°C/s or more
• Heating temperature (T2) for tempering: 350-550°C
• Holding time (t2) at heating temperature for tempering: 5-90 seconds
• Average cooling rate (CR2) from the T2 (however, it is 400°C when the T2 is 400°C or above) to 100°C after heating for tempering: 30°C/s or more
